# EUROPEAN PATENT SPECIFICATION

(11) **EP 1 344 640 B1**
(45) Date of publication and mention of the grant of the patent: **13.07.2005**
(21) Application number: 03075749.6
(22) Date of filing: 14.03.2003
(51) Int. Cl.: B32B 15/08, B32B 31/00, E04C 2/26, B62D 29/04

(54) **Method and apparatus for manufacturing a sheeting**
Verfahren und Vorrichtung zur Herstellung von Folien
Méthode et dispositif pour la production de feuilles

(30) Priority: 15.03.2002 NL 1020184
(43) Date of publication of application: 17.09.2003
(73) Proprietor: Euramax Coated Products B.V., 6045 JG Roermond (NL)
(72) Inventor: Meuwissen, Hubertus Emmanuel Joannes Marie, 6118 AV Nieuwstadt (NL); Aquina, Ferdinand Bernhard Wilhelm, 6003 CG Weert (NL)
(74) Representative: Prins, Adrianus Willem, Mr. Ir.

(56) References cited:
- EP-A- 0 285 974
- EP-A- 1 321 283
- AU-B- 523 379
- FR-A- 2 805 200
- GB-A- 2 092 950
- US-A- 3 810 816
- US-A- 4 012 267
- US-A- 5 100 732
- van Dale Groot woordenboek Engels-Nederlands (1989), p. 1331
- van Dale Groot woordenboek Nederlands-Engels (1986), p. 1043

## Description

The invention relates to a method for manufacturing a sheeting.

From French patent specification FR 2 805 200, a method for manufacturing a laminated sheeting is known. In the known method, a roll of impregnated textile is unrolled between two metal sheets. The metal sheets are unrolled from respective metal sheet rollers. Thereupon, the impregnated textile core is heated between the two metal sheets for the purpose of curing the core. An advantage of this method is that with it, the sheeting can be manufactured relatively rapidly. Moreover, the sheeting manufactured therewith has a relative smooth surface, which, as a rule, is desired from a commercial and esthetic point of view. In practice, such smooth and preferably coated sheeting is used for forming, for instance, exterior walls and roofs of caravans.

A disadvantage of the known method is that thus obtained sheeting is relatively heavy and expensive. This renders the sheeting less suitable to be used as finish for, for instance vehicles, trailers, caravans, buildings and such objects, since such heavy sheeting contributes relatively greatly to, for instance, the mass of the object to be finished therewith. Another disadvantage of the known method is that it takes up relatively much time, which increases the production costs of that sheeting.

The invention contemplates obviating the above-mentioned disadvantages. In particular, the invention contemplates providing a method for manufacturing a sheeting which is relatively inexpensive, light and insusceptible to denting, which sheeting, moreover, can have a smoothness which is desired from an esthetic point of view.

To this end, the method according to the invention is characterized by the features of claim 1.

As only one metal layer is provided by unrolling a metal sheet from a metal sheet supply roller, a relatively light and inexpensive sheeting can be obtained. Moreover, in this manner, the sheeting can be manufactured relatively rapidly in a continuous process. The at least one fiber reinforced plastic layer is applied to the metal sheet supplied in a continuous manner, for instance by applying a fibrous web with synthetic resin to the metal sheeting.

The sheeting manufactured with this method has an outside surface which is relatively insusceptible to denting. Consequently, impact by hard objects on that outside surface causes virtually no or hardly any visible damage to the sheeting on that side. Therefore, the sheeting can preserve a desired surface smoothness provided by that one metal layer. The fiber reinforced layer can contain, for instance, plastic fibers, carbon fibers and/or glass fibers and/or other fibrous material for the purpose of obtaining a good insusceptibility to denting.

Further, the sheeting manufactured with the method can relatively easily be recycled. To that end, different methods can be used, such as shredding and melting the sheeting. In addition, the sheeting can be subjected to pyrolysis, whereby the material is cooled such that the at least one plastic layer detaches from the metal layer. Further, the sheeting can relatively easily be ground and then be separated in a cyclone separator according to material.

The one metal layer is preferably one layer of aluminum, so that the sheeting can be of light and inexpensive design. For instance, the metal layer can have a layer thickness in the range of 0.3 - 1.0 mm. Preferably, the thickness of the metal layer is in the range of 0.4 - 0.6 mm, so that the sheeting contains relatively little metal and, therefore, is relatively inexpensive and light. The at least one fiber reinforced plastic layer can also be designed so as to be relatively light and, for instance, have a mass in the range of 0.8 - 1.5 kg/m², at least measured per square meter of sheeting surface. This mass depends on the amount of fibrous material present in the plastic layer and the composition of a synthetic resin used for the plastic layer. The fiber reinforced plastic can be provided with different forms of fibrous material, for instance woven fibrous cloth or chopped stranded fibrous material. The at least one plastic layer can, for instance, have a layer thickness in the range of 0.5 --1.5 mm. The ratio of the layer thicknesses of the at least one plastic layer and the metal layer can further be in the range of, for instance, 1:3 - 3:1. With a layer thickness ratio in the range mentioned, in practice, the sheeting appears to have a good insusceptibility to denting. Preferably, the at least one fiber reinforced plastic layer has substantially the same temperature expansion coefficient as the metal layer, so that warping of the sheeting under the influence of temperature fluctuations is prevented.

The invention further provides an apparatus which is characterized by the features of claim 13.

As the apparatus is provided with application means which are designed for applying fibrous material and liquid, curable synthetic resin in at least one layer to a side of the metal sheet, relatively rapidly, a relatively light and inexpensive sheeting can be manufactured.

Further elaborations of the invention are described in the subclaims. Presently, the invention will be clarified with reference to an exemplary embodiment and the drawing. In the drawing:
Fig. 1 shows a cross section of a sheeting; and
Fig. 2 shows an apparatus for manufacturing the sheeting represented in Fig. 1.

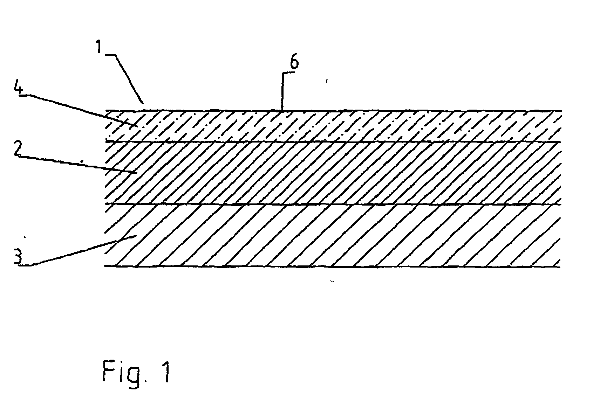

In Fig. 1, a cross section of a sheeting 1 is represented. The sheeting 1 comprises one metal layer 2 which is provided at one side with one fiber reinforced plastic layer 3. At the opposite side, the metal layer 2 is provided with a protective coating layer 4. A side 6 of this coating layer 4 remote from the metal layer 2 forms an outside surface 6 of the sheeting 1.

Preferably, the metal layer 2 and the coating layer 4 of the sheeting 1 are designed so as to be relatively smooth, so that the sheeting outside surface 6 is also smooth. This is advantageous from *inter alia* an esthetic point of view. Moreover, a smooth outside surface 6 can be cleaned relatively easily.

As the sheeting 1 is provided with a fiber reinforced plastic layer 3, at the outer surface 6, the sheeting 1 is relatively insusceptible to denting. As a result, the outside surface 6 can preserve its smoothness well when adverse mechanical influences from an environment act on that surface 6. When the metal layer 2 and the plastic layer 3 are of relatively thin design, for instance in that these layers 2, 3 have a thickness in the range of 0.4 - 0.6 mm and 0.5 -1.5 mm, respectively, and the metal layer 2 is manufactured from a light metal, such as aluminum, the sheeting 1 can be of relatively light and inexpensive design. Due to the advantages mentioned, the sheeting 1 is particularly suitable to be used as an exterior wall of, for instance, a building, vehicle, caravan and/or trailer.

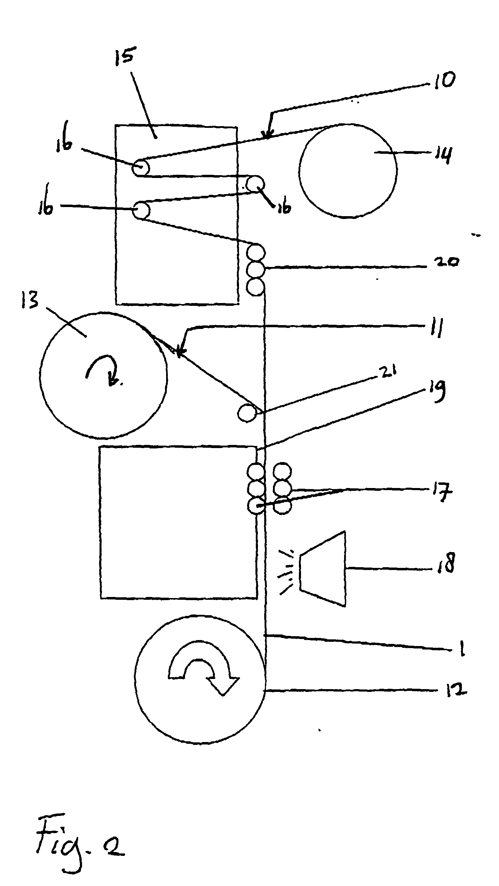

Fig. 2 schematically shows an exemplary embodiment of an apparatus for manufacturing the sheeting 1 represented in Fig. 1. The apparatus comprises application means 17, 19, designed for applying fibrous material 10 and liquid, curable synthetic resin in at least one layer 3 to a side of a metal sheet 11 for forming the sheeting 1.

The apparatus is provided with a rotatable fibrous web supply roller 14, onto which the fibrous web 10 has been wound. The fibrous web 10 can comprise, for instance, a woven carbon web, fibrous web or fibrous cloth and/or a chopped stranded glass thread. An advantage of the use of a woven web 10 is that with it, a relatively homogenous fiber reinforced plastic layer 3 with a relatively constant layer thickness can be obtained.

Downstream of the fibrous web supply roller 14, a synthetic resin reservoir 15 is disposed. During use, this reservoir 15 is filled with a liquid, curable synthetic resin. This synthetic resin can comprise, for instance, a resin based on a polyester, acrylate, epoxy, polyurethane, phenol, vinyl or the like. Preferably, the resin has a relatively low shrinkage after curing (in particular a shrinkage < 8%). Further, the synthetic resin can contain different basic and/or filler materials. Preferably, the liquid synthetic resin contains a curing agent, such as for instance a UV-light curer or a heat curer, for rapidly curing the resin. As shown by Fig. 2, the apparatus is provided with a web guide comprising three guiding rollers 16 for feeding the fibrous web 10 from the fibrous web supply roller 14 through the synthetic resin reservoir 15 for the purpose of saturating the web 10 with the synthetic resin present in that reservoir 15. The apparatus is further provided with gripping rollers 20 which discharge the web 10 from the synthetic resin reservoir 15 to a downstream arranged feed-through roller 21.

The apparatus further comprises a rotatable metal sheet supply roller 13 onto which the metal sheet 11 has been wound. The metal sheet supply roller 13 serves for a continuous supply of the metal sheet 11 to the fibrous web 10 provided with synthetic resin, proceeding along the feed-through roller 21.

The application means 17, 19 are disposed downstream of the feed-through roller 21. In the present exemplary embodiment, the application means comprise a press-on table 19 which is provided with one or more press-on rollers 17. The press-on rollers 17 are designed for pressing the metal sheet 11 supplied thereto from the feed-through roller 21 and the fibrous web 10 onto each other, for forming the sheeting 1 and for leveling the fibrous web 10 and the synthetic resin.

Downstream of the press-on table 19, a curing device in the form of lamps 18 is disposed for curing, under the influence of light, the synthetic resin of the sheeting 1 which comes from the press-on rollers 17. To this end, the lamps 18 can comprise UV-lamps when the synthetic resin contains a UV-hardener. It is self-evident that the curing device can also be designed differently, for instance as a heated curing table. Downstream of the lamps 18, the apparatus is provided with a rotatable discharge roller 12 for winding up the sheeting 1 for storage and transport.

During use of the apparatus represented in Fig. 2, the fibrous web 10 is fed by the fibrous web supply roller 14 to the guiding roller 16, for immersion in the liquid synthetic resin in the synthetic resin reservoir 15. After the fibrous web 10 has been saturated with synthetic resin in the synthetic resin reservoir 15, the web 10 is fed along the gripping rollers 20 and via the feed-through roller 21 to the press-on table 19. At the feed-through roller 21, the metal sheet 11, coming from the metal sheet supply roller 13, is added to a side of the fibrous web 10 provided with the synthetic resin. Thereupon, the metal sheet 11 and the fibrous web 10 are pressed together by the press-on rollers 17 for the purpose of adhesion of the fibrous web 10 to the metal sheet 11. Further, the press-on rollers 17 effect a leveling of the fibrous web 10 and the synthetic resin. Then, the synthetic resin is completely cured by the UV-lamps 18. Finally, the thus formed sheeting 1 is wound onto the discharge roller 12. As the synthetic resin has completely cured before the sheeting 1 is wound, conforming of the sheeting to the curvature of the discharge roller 12 is prevented. An advantage of this method for manufacturing the sheeting 1 and the use of the apparatus represented in Fig. 2 is that, thus, a large amount of sheeting 1 can be produced relatively rapidly in a continuous process.

The fibrous web 10 is provided with synthetic resin only after the web 10 is unrolled from the fibrous web supply roller 14. As a result, the part of the fibrous web 10 rolled on the supply roller 14 is relatively light. Moreover, thus, the fibrous web 10 can relatively easily be unrolled from the supply roller 14. Further, what is avoided in this manner is that first, in a separate treatment step, the fibrous web needs to be provided with synthetic resin, for instance before the fibrous web 10 is rolled onto the fibrous web supply roller 14, to then be unrolled again for the purpose of forming the sheeting 1. As a result, relatively much time is saved.

According to an alternative method, not represented in the Figures, a first layer of synthetic resin is uniformly distributed on the sheeting 1. Then, the first layer of synthetic resin is provided with one of more layers of fibrous material. Thereupon, for instance, a second layer of synthetic resin can be applied onto the first layer of synthetic resin for covering the fibrous material.

Then, the layers of synthetic resin and the fibrous material are pressed on the metal sheet, for instance by a press, roller, squeegees, doctor blades or the like. After pressing-on, the synthetic resin is cured, for instance under the influence of infrared radiation, UV-radiation, microwave radiation, in an oven, on a heated plate and/or at room temperature, under the influence of chemical hardeners present in the synthetic resin. During the pressing-on and curing, the sheet, provided with the resin and the fibrous material, can for instance be inserted into a foil covering to protect the sheeting, to prevent surroundings from being contaminated and to limit emissions. This process can be carried out continuously as well as batch-wise. A process as described hereinabove can also be carried out by pressing together metal sheets and fibrous mats already provided with synthetic resin, to then cure the synthetic resin.

It is self-evident that the invention is not limited to the exemplary embodiments described. Various modifications are possible within the framework of the invention as set forth in the following claims.

For instance, the metal layer can be provided at one side with different layers of synthetic resin or one or more layers of fibrous material for forming the at least one fiber reinforced plastic layer.

Further, the metal layer 2 can be provided with an adhesive layer for adhesion of the fiber reinforced plastic layer to the metal layer. The adhesive layer, which is not represented in the Figures, can for instance comprise a conversion layer containing or not containing chromium. Further, the adhesive layer can comprise, for instance, a relatively thin layer of synthetic resin.

In addition, a metal sheet 11 can for instance be pre-treated before the sheet 11 is used for manufacturing the sheeting 1. Preferably, the metal sheet 1 has been cleaned and degreased before the at least one fiber reinforced plastic layer 3 is applied thereon.

A side of the metal layer remote from the plastic layer can for instance be provided with a foil and/or a coating layer. When, from an esthetic point of view, it is desired that the sheeting be smooth, the foil and/or coating layer can simply be of smooth design on a metal layer already of smooth design. Applying such a foil and/or coating layer on the metal layer can further be effected relatively easily, for instance through the use of a glue connection and/or in that a coating layer to be applied is self-adhesive. Generally, for a good adhesion of the foil and/or coating layer, the outside of the metal needs only to be cleaned, in particular to be freed of grease and dust. The foil and/or coating layer can, for instance, serve for protecting the outside surface of the sheeting. The foil and/or coating layer can have an anticorrosive function. Further, the foil and/or coating layer can give the surface of the sheeting scratch resistance. In addition, this layer can give a desired color to the surface of the sheeting. Further, a surface of the sheeting can be provided with an image. This image can be provided by the foil and/or coating layer. For instance, the image can comprise a text, figure, decoration and/or logo.

Further, the metal sheet 11 can already be provided at one or each surface with a coating layer before the plastic layer is applied on that sheet 11. Such a coating layer can also serve as an adhesive layer between the metal sheet 11 and the at least one plastic layer 3.

The metal layer 2 of the sheeting 1 can be formed from various metals, for instance aluminum, iron, copper or a combination of these and other metals, for instance a metal alloy.

Further, each layer of synthetic resin can be applied in different manners onto the metal layer 2 or onto a previously applied layer of synthetic resin, for instance by spraying, spreading, pouring, immersing or a combination of these and other methods.

## Claims

1. A method for manufacturing a sheeting, wherein only one metal layer (2) is provided, wherein said metal layer (2) is provided by unrolling a metal sheet (11) from a metal sheet supply roller (13), wherein liquid, curable synthetic resin and fibrous material (10) are applied to the metal layer (2) in at least one layer (3), whereafter the synthetic resin is cured for forming at least one fiber reinforced plastic layer (3).

2. A method according to claim 1, wherein the liquid synthetic resin and the fibrous material (10) are applied to the metal sheet (11) downstream of the metal sheet supply roller (13).

3. A method according to any one of the preceding claims, wherein, for the purpose of forming a first fiber reinforced plastic layer (3), a first layer of liquid synthetic resin is applied to the metal layer (2), while the first layer of liquid synthetic resin is subsequently provided with fibrous material.

4. A method according to claim 3, wherein at least a second layer of liquid synthetic resin is applied to the first layer of synthetic resin.

5. A method according to any one of the preceding claims, wherein the metal layer (2) is provided with an adhesive layer for adhesion of the at least one fibre reinforced plastic layer (3) to the metal layer (2).

6. A method according to any one of the preceding claims, wherein the fibrous material comprises a fibrous web (10), in particular a fibrous cloth.

7. A method according to claim 6, wherein, first, the fibrous web (10) is saturated with the liquid synthetic resin, and thereupon the fibrous web (10) is applied to the metal layer (2).

8. A method according to any one of the preceding claims, wherein the fibrous material comprises synthetic fiber, carbon fiber and or glass fiber material.

9. A method according to claim 8, wherein the sheeting (1) formed from the metal sheet (11), the synthetic resin and the fibrous material is wound on a discharge roller (12), or is cut into sheets.

10. A method according to any one of the preceding claims, wherein the synthetic resin and the fibrous material (10) are pressed upon on the metal sheet (11) before the synthetic fiber has completely cured.

11. A method according to any one of the preceding claims, wherein, under the influence of a curing device (18), the synthetic resin is cured after the synthetic resin and the fibrous material (10) have been applied to the metal layer (2).

12. A method according to claim 11, wherein the liquid synthetic resin is provided with UV-light curers, while the curing device is provided with at least one UV-light source (18), while said UV-light curers are activated by the at least one UV-light source (18) for the purpose of curing the synthetic resin.

13. A method according to any one of the preceding claims, wherein the synthetic resin and the fibrous material (10) are leveled before the synthetic resin has completely cured.

14. An apparatus for manufacturing a sheeting, wherein the apparatus is provided with only one metal sheet supply roller (13) for supplying only one metal sheet (11) to application means (17, 19), which application means (17, 19) are designed for applying fibrous material (10) and liquid, curable synthetic resin in at least one layer (3) to a side of the metal sheet (11), wherein the apparatus is provided with at least one light source and/or heating source (18) for curing the synthetic resin applied to the metal sheet (11).

15. An apparatus according to claim 14, wherein the apparatus is provided with a discharge roller (12) for discharging and winding up the sheeting (1) from the application means (17, 19).

16. An apparatus according to any one of claims 14 - 15, wherein the fibrous material comprises a fibrous web (10), wherein the apparatus is provided with a fibrous web supply roller (14)for supplying the fibrous web (11) to the application means (17, 19).

17. An apparatus according to claim 16, wherein the apparatus is provided with a synthetic resin reservoir (15) which, during use, is filled with said synthetic resin, while the apparatus is provided with a web guide (16) designed for feeding the fibrous web (10) through the synthetic resin reservoir (15) for providing the web (10) with the synthetic resin.

18. An apparatus according to any one of claims 14 - 17, wherein the apparatus is provided with synthetic resin application means designed for applying the liquid synthetic resin directly to the metal sheet (11).

19. An apparatus according to any one of claims 14 - 18, wherein the sheeting is provided with only one metal layer (1) and at least one fiber reinforced plastic layer (3).

20. An apparatus according to any one of claims 14 - 19, wherein said application means (17, 19) are designed for applying the fibrous material to the metal sheet (1) downstream relative to the synthetic resin.

## Patentansprüche

1. Verfahren zum Herstellen eines bahnförmigen Materials, bei dem nur eine einzige Metallschicht (2) vorgesehen ist, wobei die Metallschicht (2) durch Abwickeln einer Metallbahn (11) von einer Metallbahnzuführrolle (13) vorgelegt wird, wobei Flüssigkeit, härtbares Kunstharz und Fasermaterial (10) in mindestens einer Schicht (3) auf die Metallschicht (2) aufgetragen werden, woraufhin das Kunstharz gehärtet wird, um mindestens eine faserverstärkte Plastikschicht (3) zu bilden.

2. Verfahren nach Anspruch 1, bei dem das flüssige Kunstharz und das Fasermaterial (10) stromabwärts der Metallbahnzuführrolle (13) auf die Metallbahn (11) aufgetragen werden.

3. Verfahren nach einem der vorhergehenden Ansprüche, bei dem zwecks Bildens einer ersten faserverstärkten. Plastikschicht (3) eine erste Schicht aus flüssigem Kunstharz auf die Metallschicht (2) aufgetragen wird, wobei die erste Schicht aus flüssigem Kunstharz anschließend mit Fasermaterial versehen wird.

4. Verfahren nach Anspruch 3, bei dem mindestens eine zweite Schicht aus flüssigem Kunstharz auf die erste Schicht aus Kunstharz aufgetragen wird.

5. Verfahren nach einem der vorhergehenden Ansprüche, bei dem die Metallschicht (2) mit einer Haftschicht zwecks Anhaftung der mindestens einen faserverstärkten Plastikschicht (3) an der Metallschicht (2) versehen ist.

6. Verfahren nach einem der vorhergehenden Ansprüche, bei dem das Fasermaterial eine Faserbahn (10), insbesondere ein Fasertuch, auf weist.

7. Verfahren nach Anspruch 6, bei dem erstens die Faserbahn (10) mit dem flüssigen Kunstharz gesättigt wird und anschließend die Faserbahn (10) auf die Metallschicht (2) aufgetragen wird.

8. Verfahren nach einem der vorhergehenden Ansprüche, bei dem das Fasermaterial Kunsfaser-, Kohlenstofffaser- und/oder Glasfaser-Material aufweist.

9. Verfahren nach Anspruch 8, bei dem das aus der Metallbahn (11), dem Kunstharz und dem Fasermaterial gebildete bahnförmige Material (1) auf eine Ausgaberolle (12) gewickelt wird oder in Blätter geschnitten wird.

10. Verfahren nach einem der vorhergehenden Ansprüche, bei dem das Kunstharz und das Fasermaterial (10) auf die Metallbahn (11) gepresst werden, bevor das Kunstharz vollständig gehärtet ist.

11. Verfahren nach einem der vorhergehenden Ansprüche, bei dem unter dem Einfluss einer Härtungsvorrichtung (18) das Kunstharz gehärtet wird, nachdem das Kunstharz und das Fasermaterial (10) auf die Metallschicht (2) aufgetragen worden sind.

12. Verfahren nach Anspruch 11, bei dem das Kunstharz mit UV-Licht-Härtungsmitteln versehen ist und die Härtungsvorrichtung mit mindestens einer UV-Lichtquelle (18) versehen ist, wobei die UV-Licht-Härtungsmittel zwecks Härtens des Kunstharzes durch die mindestens eine UV-Lichtquelle (18) aktiviert werden.

13. Verfahren nach einem der vorhergehenden Ansprüche, bei dem das Kunstharz und das Fasermaterial (10) geebnet werden, bevor das Kunstharz vollständig gehärtet ist.

14. Vorrichtung zum Herstellen eines bahnförmigen Materials, wobei die Vorrichtung mit nur einer Metalibahnzuführrolle (13) zum Zuführen nur einer Metallbahn (11) zu Applizierungsvorrichtungen (17,19) versehen ist, wobei die Applizierungsvorrichtungen (17,19) ausgebildet sind zum Applizieren von Fasermatenal (10) und flüssigem, härtbaren Kunstharz in mindestens einer Schicht (3) auf eine Seite der Metallbahn (11), wobei die Vorrichtung mit mindestens einer Lichtquelle und/oder Heizquelle (18) zum Härten des auf die Metallbahn (11) aufgetragenen Kunstharzes versehen sind.

15. Vorrichtung nach Anspruch 14, wobei die Vorrichtung mit einer Ausgaberolle (12) zum Ausgeben und Aufwickeln des von den Applizierungsvorrichtungen (17,19) kommenden bahnförmigen Materials (1) versehen ist.

16. Vorrichtung nach einem der Ansprüche 14-15, bei der das Fasermaterial eine Faserbahn (10) aufweist, wobei die Vorrichtung mit einer Faserbahnzuführrolle (14) zum Zuführen der Faserbahn (11) zu den Applizierungsvorrichtungen (17,19) versehen ist.

17. Vorrichtung nach Anspruch 16, wobei die Vorrichtung mit einem Kunstharzreservoir (15) versehen ist, das bei Betrieb mit dem Kunstharz gefüllt ist, wobei die Vorrichtung mit einer Bahnführung (16) versehen ist, die zum Zuführen der Faserbahn (10) durch das Kunstharzreservoir (15) ausgebildet ist, um die Bahn (10) mit dem Kunstharz zu versehen.

18. Vorrichtung nach einem der Ansprüche 14-17, bei der die Vorrichtung mit Kunstharzapplizierungsvorrichtungen versehen ist, die zum Applizieren des flüssigen Kunstharzes direkt auf die Metallbahn (11) ausgebildet sind.

19. Vorrichtung nach einem der Ansprüche 14-18, bei der das bahnförmige Material mit nur einer Metallschicht (1) und mindestens einer faserverstärkten Plastikschicht (3) versehen ist.

20. Vorrichtung nach einem der Ansprüche 14-19, bei der die Applizierungsvorrichtungen (17,19) derart ausgebildet sind, dass sie das Fasermaterial relativ zu dem Kunstharz stromabwärts auf die Metallbahn (1) auftragen.

## Revendications

1. Procédé pour fabriquer une feuille, dans lequel seulement une couche métallique (2) est prévue, dans lequel ladite couche métallique (2) est fournie en déroulant une feuille métallique (11) à partir d'un rouleau d'alimentation en feuille métallique (13), dans lequel une résine synthétique durcissable liquide et une matière fibreuse (10) sont appliqués sur la couche métallique (2) en au moins une couche (3), après quoi la résine synthétique est durcie pour former au moins une couche en matière plastique renforcée de fibres (3).

2. Procédé selon la revendication 1, dans lequel la résine synthétique liquide et la matière fibreuse (10) sont appliquées sur la feuille métallique (11) en aval du rouleau d'alimentation en feuille métallique (13).

3. Procédé selon une quelconque des revendications précédentes, dans lequel, dans le but de réaliser une première couche (3) en matière plastique renforcée de fibres, une première couche de résine synthétique liquide est appliquée sur la couche métallique (2), tandis que la première couche de résine synthétique liquide est munie par la suite de matière fibreuse.

4. Procédé selon la revendication 3, dans lequel au moins une seconde couche de résine synthétique liquide est appliquée sur la première couche de résine synthétique.

5. Procédé selon une quelconque des revendications précédentes, dans lequel la couche métallique (2) est munie d'une couche adhésive pour l'adhérence au moins de la première couche en matière plastique renforcée de fibres (3) sur la couche métallique (2).

6. Procédé selon une quelconque des revendications précédentes, dans lequel la matière fibreuse comprend une bande fibreuse (10), en particulier un tissu fibreux.

7. Procédé selon la revendication 6, dans lequel, tout d'abord, la bande fibreuse (10) est saturée de la résine synthétique liquide, et par la suite la bande fibreuse (10) est appliquée sur la couche métallique (2).

8. Procédé selon une quelconque des revendications précédentes, dans lequel la matière fibreuse comprend une matière en fibres synthétiques, en fibres de carbone et/ou en fibres de verre.

9. Procédé selon la revendication 8, dans lequel la feuille (1) formée à partir de la feuille métallique (11), la résine synthétique et la matière fibreuse est enroulée sur un rouleau de sortie (12), ou est découpée en feuilles.

10. Procédé selon une quelconque des revendications précédentes, dans lequel la résine synthétique et la matière fibreuse (10) sont pressées sur la feuille métallique (11) avant le durcissement complet de la fibre synthétique.

11. Procédé selon une quelconque des revendications précédentes, dans lequel, sous l'influence d'un dispositif de durcissement (18), la résine synthétique est durcie après que la résine synthétique et la matière fibreuse (10) ont été appliquées sur la couche métallique (2).

12. Procédé selon la revendication 11, dans lequel la résine synthétique liquide est munie de durcisseurs à la lumière ultraviolette, tandis que le dispositif de durcissement est muni d'au moins une source de lumière ultraviolette (18), tandis que lesdits durcisseurs à la lumière ultraviolette sont activés par au moins la source de lumière ultraviolette (18) dans le but de durcir la résine synthétique.

13. Procédé selon une quelconque des revendications précédentes, dans lequel la résine synthétique et la matière fibreuse (10) sont mises à niveau avant le durcissement complet de la résine synthétique.

14. Appareil pour fabriquer une feuille, dans lequel l'appareil est muni seulement d'un rouleau d'alimentation en feuille métallique (13) pour fournir seulement une feuille métallique (11) à des moyens d'application (17, 19), lesquels moyens d'application (17, 19) sont conçus pour appliquer une matière fibreuse (10) et une résine synthétique durcissable liquide en au moins une couche (3) sur une face de la feuille métallique (11), dans lequel l'appareil est muni d'au moins une source de lumière et/ou d'une source de chauffage (18) pour durcir la résine synthétique appliquée sur la feuille métallique (11).

15. Appareil selon la revendication 14, dans lequel l'appareil est muni d'un rouleau de sortie (12) pour évacuer et enrouler la feuille (1) à partir des moyens d'application (17, 19).

16. Appareil selon une quelconque des revendications 14 - 15, dans lequel la matière fibreuse comprend une bande fibreuse (10), dans lequel l'appareil est muni d'un rouleau d'alimentation en bande fibreuse (14) pour fournir la bande fibreuse (11) aux moyens d'application (17, 19).

17. Appareil selon la revendication 16, dans lequel l'appareil est muni d'un réservoir de résine synthétique (15) qui, pendant l'utilisation, est rempli de ladite résine synthétique, tandis que l'appareil est muni d'un guide de bande (16) conçu pour amener la bande fibreuse (10) à travers le réservoir de résine synthétique (15) pour fournir la bande (10) avec la résine synthétique.

18. Appareil selon une quelconque des revendications 14 - 17, dans lequel l'appareil est muni de moyens d'application de la résine synthétique, conçus pour appliquer la résine synthétique directement sur la feuille métallique (11).

19. Appareil selon une quelconque des revendications 14 - 18, dans lequel la feuille est munie seulement d'une couche métallique (11) et d'au moins une couche en matière plastique renforcée de fibres (3).

20. Appareil selon une quelconque des revendications 14 - 19, dans lequel lesdits moyens d'application (17, 19) sont conçus pour appliquer la matière fibreuse sur la feuille métallique (1) en aval par rapport à la résine synthétique.
